# EUROPEAN PATENT SPECIFICATION

(11) **EP 4 436 266 B1**
(45) Date of publication and mention of the grant of the patent: **25.03.2026**
(21) Application number: 22894734.7
(22) Date of filing: 14.11.2022
(51) Int. Cl.: H04L 67/133, H04L 67/125, H04W 52/02, G06F 9/54, H04L 12/12

(54) **RPC-BASED NETWORK CONNECTION HANDLING**
RPC-BASIERTE NETZWERKVERBINDUNGSVERWALTUNG
GESTION DES CONNEXIONS RÉSEAU BASÉE SUR RPC

(30) Priority: 17.11.2021 CN 202111366049
(43) Date of publication of application: 25.09.2024
(73) Proprietor: Vivo Mobile Communication Co., Ltd., Dongguan, Guangdong 523863 (CN)
(72) Inventor: HU, Binbin, Dongguan, Guangdong 523863 (CN)
(74) Representative: Conti, Marco
(86) International application number: PCT/CN2022/131596
(87) International publication number: WO 2023/088198

(56) References cited:
- CN-A- 106 713 238
- CN-A- 107 861 602
- CN-A- 108 616 855
- CN-A- 109 062 714
- CN-A- 113 395 293
- CN-A- 113 535 431
- CN-A- 113 891 441
- US-A1- 2014 096 148

## Description

### TECHNICAL FIELD

This application pertains to the field of electronic technologies, and specifically relates to network connection methods and electronic devices.

### BACKGROUND

With development of mobile Internet technologies, a small intelligent terminal such as a watch or a wristband also has a cellular network capability to facilitate network communication of users because a modem (modem) is integrated. Further, the intelligent terminal gradually becomes a portable thing for people to live, work, and travel. However, continuous working of the modem for a relatively long time may lead to high power consumption of the intelligent terminal, which affects an endurance capability of the small intelligent terminal. Document CN113395293A discloses a RPC-based network socket implementation method. Document CN106713238A discloses a Remote process calling method, device and system.

### SUMMARY

Embodiments of this application aim to provide a network connection method and apparatus, and an electronic device, to resolve a problem that continuous working of a modem for a relatively long time affects an endurance capability of a small intelligent terminal.

To resolve the foregoing technical problem, this application is implemented as follows.

The invention is set out in the appended set of claims.

In the embodiments of this application, when the first electronic device meets the remote networking condition, the first electronic device sends the RPC operation request including the network interface function call number to the second electronic device, so that the second electronic device calls the network interface call function indicated by the network interface function call number, generates the RPC operation response according to the response information of the network interface called by the network interface call function, and sends the RPC operation response to the first electronic device. After receiving the RPC operation response sent by the second electronic device, the first electronic device may parse the RPC operation response to obtain the response information of the network interface. In this technical solution, the first electronic device may send the RPC operation request to the second electronic device, so that the second electronic device calls the local network interface, and returns the response information of the network interface to the first electronic device. The first electronic device implements proxy calling on the network interface of the second electronic device, and therefore the network interface of the second electronic device is a network communication capability provided by the first electronic device. Compared with the related technology, the first electronic device is prevented from using a network component such as a modem to provide a network communication capability. On the basis of ensuring that the first electronic device has a network communication capability, working duration of the network component in the first electronic device is reduced, thereby reducing impact of high running power consumption of the network component on an endurance capability of the first electronic device, and improving the endurance capability of the first electronic device.

### BRIEF DESCRIPTION OF DRAWINGS

FIG. 1 is a schematic structural diagram of a network connection system according to an embodiment of this application;
FIG. 2 is a schematic diagram of a system framework of a network connection system according to an embodiment of this application;
FIG. 3 is a flowchart of a network connection method according to an embodiment of this application;
FIG. 4 is a flowchart of another network connection method according to an embodiment of this application;
FIG. 5 is a flowchart of still another network connection method according to an embodiment of this application;
FIG. 6 is a flowchart of yet another network connection method according to an embodiment of this application;
FIG. 7 is a block diagram of a network connection apparatus according to an embodiment of this application;
FIG. 8 is a block diagram of another network connection apparatus according to an embodiment of this application;
FIG. 9 is a block diagram of an electronic device according to an embodiment of this application; and
FIG. 10 is a schematic diagram of a hardware structure of an electronic device according to an embodiment of this application.

### DESCRIPTION OF EMBODIMENTS

The following clearly and completely describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application without creative efforts shall fall within the protection scope of this application.

In the specification and claims of this application, the terms "first", "second", and the like are intended to distinguish between similar objects but do not describe a specific order or sequence. It should be understood that the terms used in such a way are interchangeable in proper circumstances so that the embodiments of this application can be implemented in orders other than the order illustrated or described herein. Objects classified by "first" and "second" are usually of a same type, and the number of objects is not limited. For example, there may be one or more first objects. In addition, in the specification and claims, "and/or" represents at least one of connected objects, and a character "/" generally represents an "or" relationship between associated objects.

With reference to the accompanying drawings, the following describes in detail the network connection method provided in the embodiments of this application by using specific embodiments and application scenes thereof.

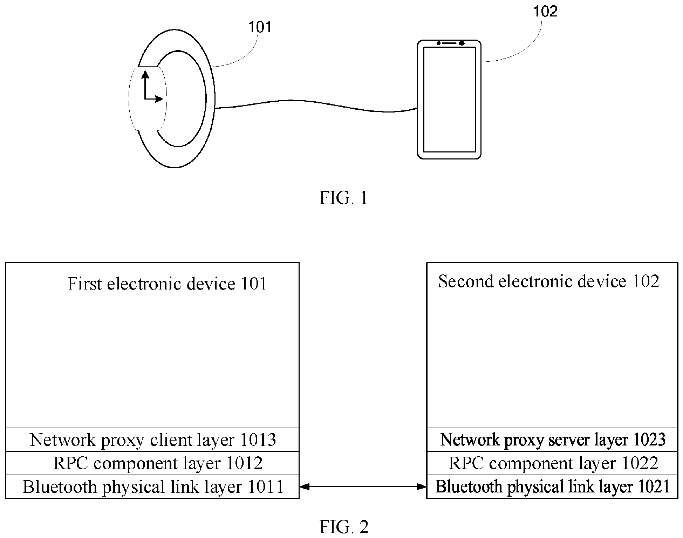

Referring to FIG. 1, FIG. 1 is a schematic structural diagram of a network connection system according to an embodiment of this application. As shown in FIG. 1, the network connection system includes a first electronic device 101 and a second electronic device 102. A connection may be established between the first electronic device 101 and the second electronic device 102 based on a protocol such as Bluetooth or a universal serial bus (Universal Serial Bus, USB), to perform communication through the established connection.

**In** the following embodiments of this application, Bluetooth communication between the first electronic device and the second electronic device is used as an example for description. Optionally, the first electronic device and/or the second electronic device may have a Bluetooth low energy (Bluetooth Low Energy, BLE) component and a classic Bluetooth (Bluetooth, BT) module. The first electronic device and the second electronic device may be connected to each other through the Bluetooth low energy component and/or the classic Bluetooth module, to implement a BLE connection or a BT connection between the first electronic device and the second electronic device.

A remote procedure call (Remote Procedure Call, RPC) component may run in the first electronic device and the second electronic device, so that the first electronic device has a function of remotely calling the second electronic device. The first electronic device may send an RPC operation request to the second electronic device through the Bluetooth connection between the first electronic device and the second electronic device, where the RPC operation request includes a network interface function call number. After receiving the RPC operation request, the second electronic device may call a network interface call function indicated by the network interface function call number, so as to call a network interface corresponding to the network interface call function by using the network interface call function. Response information of the network interface is sent to the first electronic device, so that the first electronic device implements proxy calling on the network interface of the second electronic device, where the network interface of the second electronic device is a network communication capability provided by the first electronic device. In this case, the first electronic device may be used as a network proxy client, and the second electronic device may be used as a network proxy server to provide a network communication capability for the first electronic device. For example, the first electronic device and the second electronic device may be a mobile phone, a computer, a wearable device, or the like. FIG. 1 is an example in which the first electronic device is a wearable device, and the second electronic device is a mobile phone for description.

Optionally, a Bluetooth-based connection between the first electronic device and the second electronic device may be used as an example. Referring to FIG. 2, FIG. 2 is a schematic diagram of a system framework of a network connection system according to an embodiment of this application. As shown in FIG. 2, the first electronic device 101 includes a microcontroller unit (Microcontroller Unit, MCU), and the MCU includes a Bluetooth physical link layer 1011, an RPC component layer 1012, and a network proxy client layer 1013. The second electronic device 102 includes a Bluetooth physical link layer 1021, an RPC component layer 1022, and a network proxy server layer 1023.

Both the network proxy client layer 1013 of the first electronic device 101 and the network proxy server layer 1023 of the second electronic device 102 include a network interface. The RPC component layer 1012 of the first electronic device 101 is configured to generate the RPC operation request including the network interface function call number according to an RPC protocol, and transmit the RPC operation request to the Bluetooth physical link layer 1011. The Bluetooth physical link layer 1011 of the first electronic device 101 transmits the RPC operation request to the Bluetooth physical link layer 1021 of the second electronic device 102. The Bluetooth physical link layer 1021 transmits the received RPC operation request to the RPC component layer 1022. The RPC component layer 1022 parses the RPC operation request to obtain the network interface function call number for calling. The second electronic device 102 calls the network interface call function indicated by the network interface function call number, and calls the network interface in the network proxy server layer 1023 by using the network interface call function.

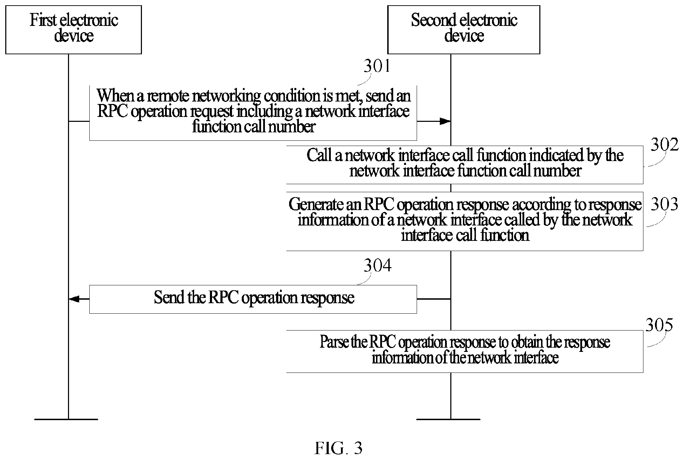

Referring to FIG. 3, FIG. 3 is a flowchart of a network connection method according to an embodiment of this application. The network connection method may be applied to the network connection system shown in FIG. 1 or FIG. 2. As shown in FIG. 3, the network connection method includes:
Step 301: When meeting a remote networking condition, a first electronic device sends an RPC operation request including a network interface function call number to a second electronic device.

In this embodiment of this application, the first electronic device may detect running data of the first electronic device periodically or in real time, and determine whether the first electronic device meets the remote networking condition, to determine whether the first electronic device needs to perform proxy calling on a network interface of the second electronic device.

When the first electronic device does not meet the remote networking condition, the first electronic device may call a local network interface to implement network communication. When the first electronic device meets the remote networking condition, the first electronic device may obtain a network interface function call number of a network interface function. The network interface function is used to call the network interface, and the network interface function call number is used to identify the network interface function. The RPC operation request is generated by encapsulating the network interface function call number of the network interface function according to an RPC protocol. The first electronic device may send the RPC operation request to the second electronic device through a Bluetooth-based connection established between the first electronic device and the second electronic device. It should be noted that the RPC operation request may further include information such as a network parameter and a network address of the second electronic device. The network interface is configured to provide a network communication function. For example, the network interface may be a socket (socket) interface, and the socket interface is also referred to as a bsd socket interface.

The remote networking condition may be a condition in which the first electronic device may perform proxy calling on a network interface of another electronic device. Optionally, the remote networking condition may include: the first electronic device is connected to the second electronic device; or the first electronic device is connected to the second electronic device, and power consumption of the first electronic device is greater than a specified power consumption threshold; or the first electronic device is connected to the second electronic device, and electrical energy of the first electronic device is less than a specified electrical energy threshold.

For example, in a case that the remote networking condition is that the first electronic device is connected to the second electronic device, the first electronic device may obtain a Bluetooth connection state between the first electronic device and the second electronic device in real time. When it is detected that the Bluetooth connection state between the first electronic device and the second electronic device is that a Bluetooth connection between the first electronic device and the second electronic device is successfully established, it is determined that the first electronic device meets the remote networking condition.

Step 302: The second electronic device calls a network interface call function indicated by the network interface function call number.

In this embodiment of this application, after receiving the RPC operation request sent by the first electronic device, the second electronic device may parse the RPC operation request according to the RPC protocol, to obtain the network interface function call number included in the RPC operation request. The second electronic device calls the network interface call function indicated by the network interface function call number, to call a local network interface of the second electronic device by using the network interface call function.

For example, the RPC operation request includes a socket interface parameter and the network interface function call number of the network interface call function used to call the socket interface. After parsing the RPC operation request, the second electronic device obtains the socket interface parameter and the network interface function call number. The second electronic device calls the network interface function indicated by the network interface function call number, and imports the socket interface parameter to the network interface function.

Step 303: The second electronic device generates an RPC operation response according to response information of a network interface called by the network interface call function.

In this embodiment of this application, the second electronic device calls the network interface call function to call the network interface by using the network interface call function, and obtains the response information returned by the network interface. The second electronic device generates the RPC operation response by encapsulating the response information according to the RPC protocol.

Step 304: The second electronic device sends the RPC operation response to the first electronic device.

In this embodiment of this application, the second electronic device sends the RPC operation response to the first electronic device through a Bluetooth-based connection established between the second electronic device and the first electronic device.

Step 305: The first electronic device parses the RPC operation response to obtain the response information of the network interface.

In this embodiment of this application, after receiving the RPC operation response sent by the second electronic device, the first electronic device parses the RPC operation response to obtain the response information of the network interface, so as to implement a network communication function of the first electronic device.

In conclusion, in the network connection method provided in this embodiment of this application, when the first electronic device meets the remote networking condition, the first electronic device sends the RPC operation request including the network interface function call number to the second electronic device, so that the second electronic device calls the network interface call function indicated by the network interface function call number, generates the RPC operation response according to the response information of the network interface called by the network interface call function, and sends the RPC operation response to the first electronic device. After receiving the RPC operation response sent by the second electronic device, the first electronic device may parse the RPC operation response to obtain the response information of the network interface. In this technical solution, the first electronic device may send the RPC operation request to the second electronic device, so that the second electronic device calls the local network interface, and returns the response information of the network interface to the first electronic device. The first electronic device implements proxy calling on the network interface of the second electronic device, and therefore the network interface of the second electronic device is a network communication capability provided by the first electronic device. Compared with the related technology, the first electronic device is prevented from using a network component such as a modem to provide a network communication capability. On the basis of ensuring that the first electronic device has a network communication capability, working duration of the network component in the first electronic device is reduced, thereby reducing impact of high running power consumption of the network component on an endurance capability of the first electronic device, and improving the endurance capability of the first electronic device.

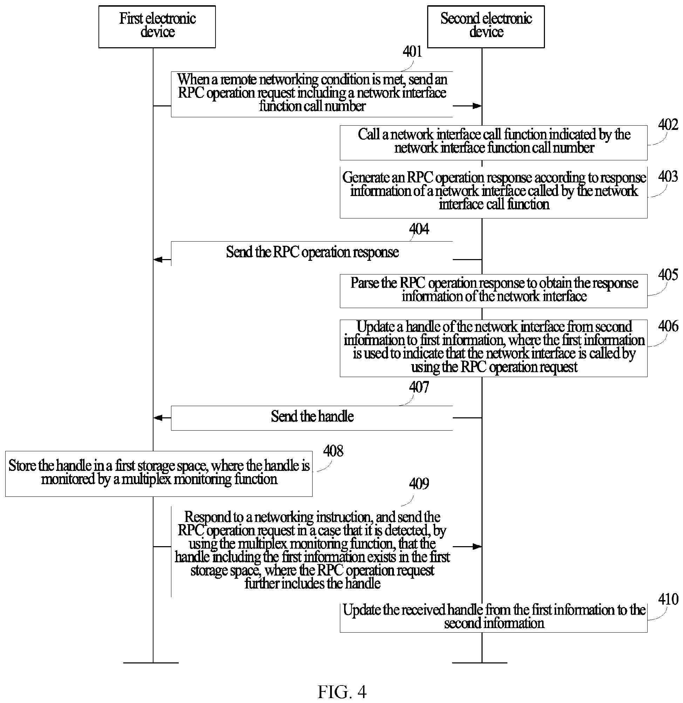

Referring to FIG. 4, FIG. 4 is a flowchart of a network connection method according to an embodiment of this application. The network connection method may be applied to the network connection system shown in FIG. 1 or FIG. 2. As shown in FIG. 4, the network connection method includes:
Step 401: When meeting a remote networking condition, a first electronic device sends an RPC operation request including a network interface function call number to a second electronic device.

For an explanation and implementation of this step, refer to the explanation and implementation of the foregoing step 301. Details are not described in this embodiment of this application.

Step 402: The second electronic device calls a network interface call function indicated by the network interface function call number.

For an explanation and implementation of this step, refer to the explanation and implementation of the foregoing step 302. Details are not described in this embodiment of this application.

It should be noted that in an optional application scene, both the first electronic device and the second electronic device may perform an operation in a multiplexing manner. In this embodiment of this application, an example in which both the first electronic device and the second electronic device may perform an operation in a multiplexing manner is used for description. For example, the second electronic device may call the network interface call function by using a multiplex monitoring function. The second electronic device may create a handle of the network interface called by the network interface call function, and content of the handle is second information. The second electronic device stores the handle of the network interface in a second storage space. A process in which the second electronic device calls the network interface call function indicated by the network interface function call number includes: when it is detected, by using the multiplex monitoring function, that the handle that is of the network interface and that includes the second information exists in the second storage space, calling the network interface call function indicated by the network interface function call number.

The handle is also referred to as a handle number, and is monitored by the multiplex monitoring function. Optionally, the second storage space may store the handle of the network interface. The multiplex monitoring function is used to monitor the handle of the network interface. When the second electronic device detects, by using the multiplex monitoring function, that the handle that is of the network interface and that includes the second information exists in the second storage space, a process of calling the network interface call function indicated by the network interface function call number may include: when it is detected, by using the multiplex monitoring function, that the handle of the network interface is the second information, calling the network interface call function indicated by the network interface function call number. Optionally, the multiplex monitoring function may be a select function or a poll function.

For example, the second electronic device establishes the handle of the network interface in response to the networking instruction, and content of the handle is the second information. The handle of the network interface is stored in the second storage space. When the select function detects that the handle of the network interface is the second information, the network interface call function indicated by the network interface function call number is called. The networking instruction may be generated by the second electronic device when a user to whom the second electronic device belongs wants to use a network communication function by using the second electronic device. For example, the user clicks a networking identifier, so that when receiving the click operation for the networking identifier, the second electronic device generates the networking instruction in response to the click operation.

Step 403: The second electronic device generates an RPC operation response according to response information of a network interface called by the network interface call function.

In this embodiment of this application, the second electronic device calls the network interface call function to call the network interface by using the network interface call function, and obtains the response information returned by the network interface. The second electronic device generates the RPC operation response by encapsulating the response information according to the RPC protocol.

Step 404: The second electronic device sends the RPC operation response to the first electronic device.

In this embodiment of this application, the second electronic device sends the RPC operation response to the first electronic device through a Bluetooth-based connection established between the second electronic device and the first electronic device.

Step 405: The first electronic device parses the RPC operation response to obtain the response information of the network interface.

In this embodiment of this application, after receiving the RPC operation response sent by the second electronic device, the first electronic device parses the RPC operation response to obtain the response information of the network interface, so as to implement a network communication function of the first electronic device.

Step 406: The second electronic device updates a handle of the network interface from second information to first information, where the first information is used to indicate that the network interface is called by using the RPC operation request.

Optionally, the first information may be specified information, or the first information may be information generated by using a setting rule according to the second information. In a case that the first information may be the information generated by using the setting rule according to the second information, a process in which the second electronic device updates the handle of the network interface from the second information to the first information may include: the second electronic device generates the first information by using the setting rule according to the second information, and updates the handle of the network interface from the second information to the first information.

For example, the content of the handle may be a value, and the handle may be a fixed value greater than 100,000. The setting rule may be that the first information is a sum of the second information and 100,000. If the handle that is of the network interface and that is created by the second electronic device is 26, that is, the second information is 26, the first information generated by the second electronic device by using the setting rule according to the second information is 100,026. The handle of the network interface is updated to 100,026.

Step 407: The second electronic device sends the handle to the first electronic device.

In this embodiment of this application, the second electronic device may send the handle of the network interface to the first electronic device through the Bluetooth-based connection established between the second electronic device and the first electronic device. It should be noted that step 406 may be performed before step 403. In this case, that the second electronic device generates the RPC operation response according to the response information of the network interface called by the network interface call function may be replaced with that the second electronic device generates the RPC operation response according to the response information of the network interface called by the network interface call function and the handle of the network interface. That is, the RPC operation response may include the response information of the network interface and the handle of the network interface.

Step 408: The first electronic device stores the handle in a first storage space, where the handle is monitored by a multiplex monitoring function.

In this embodiment of this application, after receiving the handle that is of the network interface and that is sent by the second electronic device, the first electronic device may store the handle of the network interface in the first storage space. For example, the first electronic device may include a virtual file system layer, and the first storage space may be a storage space corresponding to the virtual file system layer. The first electronic device may monitor, by using the multiplex function, the handle stored in the first storage space.

Step 409: The first electronic device responds to a networking instruction, and sends the RPC operation request to the second electronic device in a case that it is detected, by using the multiplex monitoring function, that the handle including the first information exists in the first storage space, where the RPC operation request further includes the handle.

In this embodiment of this application, when the user wants to use the network communication function, a target input used to trigger the network communication function may be performed on the first electronic device, and the networking instruction is generated in response to the target input. The networking instruction is used to reflect that the first electronic device needs to call the network interface. In response to the networking instruction, the first electronic device may locally call the network interface call function, to call the network interface by using the network interface call function, and obtain the response information of the network interface. Alternatively, the first electronic device may send the RPC operation request to the second electronic device, so that the first electronic device performs proxy calling on the network interface of the second electronic device, to obtain the response information of the network interface of the second electronic device.

The first electronic device responds to the networking instruction and determines whether it is detected, by using the multiplex monitoring function, that the handle including the first information exists in the first storage space, to determine whether the first electronic device can perform proxy calling on the network interface of the second electronic device by sending the RPC request to the second electronic device.

When it is detected, by using the multiplex monitoring function, that the handle including the first information exists in the first storage space, it indicates that the first electronic device may perform proxy calling on the network interface of the second electronic device. In this case, the first electronic device sends the RPC operation request to the second electronic device. The RPC operation request includes the network interface function call number and the handle that is of the network interface and that includes the first information. When it is not detected, by using the multiplex monitoring function, that the handle including the first information exists in the first storage space, it indicates that the first electronic device cannot perform proxy calling on the network interface of the second electronic device. In this case, the first electronic device may call the network interface call function to obtain the response information of the network interface called by the network interface call function. In other words, the first electronic device may call the local network interface to receive the response information of the network interface, so as to implement network communication.

Optionally, the first storage space may store the handle of the network interface. When the handle that includes the first information and that is sent by the second electronic device is not received, the handle stored in the first storage space may be the handle that is of the network interface and that is created by the first electronic device, and the handle includes third information. After the first electronic device receives the handle that includes the first information and that is sent by the second electronic device, a process in which the first electronic device stores the handle in the first storage space may include: the first electronic device updates the handle that is of the network interface and that includes the third information in the first storage space to the handle including the first information.

The first electronic device may respond to the networking instruction, and determines whether it is detected, by using the multiplex monitoring function, that the handle of the network interface in the first storage space is the first information. In a case that it is detected, by using the multiplex monitoring function, that the handle of the network interface in the first storage space is the first information, it is determined that the handle including the first information exists in the first storage space. In a case that it is detected, by using the multiplex monitoring function, that the handle of the network interface in the first storage space is not the first information, it is determined that the handle including the first information does not exist in the first storage space.

For example, the example in step 406 is still used as an example. The first electronic device determines whether it is detected, by using the multiplex monitoring function, that the handle of the network interface in the first storage space is 100,026. In a case that it is detected that the handle of the network interface in the first storage space is 100,026, the RPC operation request is sent to the second electronic device, so that the second electronic device calls the local network interface in response to the RPC request, and returns the response information of the network interface to the first electronic device. In a case that it is detected that the handle of the network interface in the first storage space is not 100,026, the first electronic device may call the local network interface to obtain the response information of the network interface.

Step 410: The second electronic device updates the received handle from the first information to the second information, and perform step 402.

In this embodiment of this application, after receiving the RPC operation request that includes the handle of the network interface and that is sent by the first electronic device, the second electronic device updates the received handle from the first information to the second information, and stores the updated handle in the second storage space. Therefore, the second electronic device performs step 402 and in a case that it is detected, by using the multiplex monitoring function, that the handle that is of the network interface and that includes the second information exists in the second storage space, calls the network interface call function indicated by the network interface function call number.

Optionally, in a case that the first information may be the information generated by using the setting rule according to the second information, a process in which the second electronic device updates the received handle from the first information to the second information may include: the second electronic device restores and generates the second information by using the setting rule according to the first information, and updates the handle of the network interface from the first information to the second information.

For example, the setting rule may be that the first information is a sum of the second information and 100,000. If the handle in the RPC operation request received by the second electronic device is 100,026, the second information generated by the second electronic device by using the setting rule according to the first information is 26. The handle of the network interface in the first storage space is updated to 26.

In this embodiment of this application, after the second electronic device calls the network interface call function indicated by the network interface function call number, the second electronic device updates the handle of the network interface to the first information used to indicate that the network interface is called by using the RPC operation request, and sends the updated handle of the network interface to the first electronic device. Therefore, when performing an operation in a multiplexing manner, the first electronic device may determine, according to whether the handle that is of the network interface and that includes the first information is detected by using the multiplex monitoring function, that the first electronic device performs proxy calling on the network interface of the second electronic device, or performs calling on the local network interface of the first electronic device. In other words, the first electronic device may distinguish, according to whether the handle that is of the network interface and that includes the first information is detected by using the multiplex monitoring function, whether the first electronic device uses the network interface of the second electronic device to provide the network communication capability for the first electronic device, or the first electronic device uses the local network interface of the first electronic device to provide the network communication capability for the first electronic device, so that the first electronic device can be compatible with calling of the local network interface and calling of the network interface of the second electronic device, thereby resolving a problem of calling compatibility in multiplexing.

In conclusion, in the network connection method provided in this embodiment of this application, when the first electronic device meets the remote networking condition, the first electronic device sends the RPC operation request including the network interface function call number to the second electronic device, so that the second electronic device calls the network interface call function indicated by the network interface function call number, generates the RPC operation response according to the response information of the network interface called by the network interface call function, and sends the RPC operation response to the first electronic device. After receiving the RPC operation response sent by the second electronic device, the first electronic device may parse the RPC operation response to obtain the response information of the network interface. In this technical solution, the first electronic device may send the RPC operation request to the second electronic device, so that the second electronic device calls the local network interface, and returns the response information of the network interface to the first electronic device. The first electronic device implements proxy calling on the network interface of the second electronic device, and therefore the network interface of the second electronic device is a network communication capability provided by the first electronic device. Compared with the related technology, the first electronic device is prevented from using a network component such as a modem to provide a network communication capability. On the basis of ensuring that the first electronic device has a network communication capability, working duration of the network component in the first electronic device is reduced, thereby reducing impact of high running power consumption of the network component on an endurance capability of the first electronic device, and improving the endurance capability of the first electronic device.

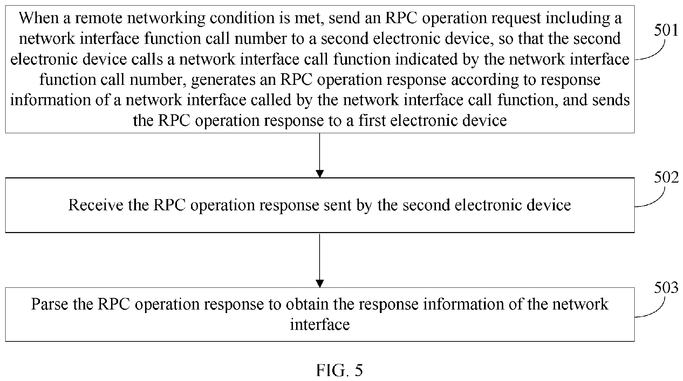

Referring to FIG. 5, FIG. 5 is a flowchart of a network connection method according to an embodiment of this application. The network connection method may be applied to the network connection system shown in FIG. 1 or FIG. 2, and is performed by a first electronic device. As shown in FIG. 5, the network connection method includes:
Step 501: When a remote networking condition is met, send an RPC operation request including a network interface function call number to a second electronic device, so that the second electronic device calls a network interface call function indicated by the network interface function call number, generates an RPC operation response according to response information of a network interface called by the network interface call function, and sends the RPC operation response to the first electronic device.
Step 502: Receive the RPC operation response sent by the second electronic device.
Step 503: Parse the RPC operation response to obtain the response information of the network interface.

In this embodiment of this application, when the first electronic device meets the remote networking condition, the first electronic device sends the RPC operation request including the network interface function call number to the second electronic device, so that the second electronic device calls the network interface call function indicated by the network interface function call number, generates the RPC operation response according to the response information of the network interface called by the network interface call function, and sends the RPC operation response to the first electronic device. After receiving the RPC operation response sent by the second electronic device, the first electronic device may parse the RPC operation response to obtain the response information of the network interface. In this technical solution, the first electronic device may send the RPC operation request to the second electronic device, so that the second electronic device calls the local network interface, and returns the response information of the network interface to the first electronic device. The first electronic device implements proxy calling on the network interface of the second electronic device, and therefore the network interface of the second electronic device is a network communication capability provided by the first electronic device. Compared with the related technology, the first electronic device is prevented from using a network component such as a modem to provide a network communication capability. On the basis of ensuring that the first electronic device has a network communication capability, working duration of the network component in the first electronic device is reduced, thereby reducing impact of high running power consumption of the network component on an endurance capability of the first electronic device, and improving the endurance capability of the first electronic device.

Optionally, after the sending a remote procedure call RPC operation request including a network interface function call number to a second electronic device, the method further includes:
receiving a handle that is of the network interface and that is sent by the second electronic device, where the handle includes first information, the handle is sent by the second electronic device to the first electronic device after the second electronic device calls the network interface and updates the handle of the network interface to the first information, and the first information is used to indicate that the network interface is called by using the RPC operation request;
storing the handle in a first storage space, where the handle is monitored by a multiplex monitoring function; and
responding to a networking instruction, and sending the RPC operation request to the second electronic device in a case that it is detected, by using the multiplex monitoring function, that the handle including the first information exists in the first storage space, where the RPC operation request further includes the handle.

Optionally, the responding to a networking instruction further includes:
responding to the networking instruction, and in a case that it is not detected, by using the multiplex monitoring function, that the handle including the first information exists in the first storage space, calling the network interface call function, and obtaining the response information of the network interface called by the network interface call function. Optionally, the remote networking condition includes:
the first electronic device is connected to the second electronic device; or
the first electronic device is connected to the second electronic device, and power consumption of the first electronic device is greater than a specified power consumption threshold; or
the first electronic device is connected to the second electronic device, and electrical energy of the first electronic device is less than a specified electrical energy threshold.

In the network connection method provided in this embodiment of this application, for an explanation and implementation of each step, refer to the foregoing explanation and implementation of the related step in the network connection method shown in FIG. 3 or FIG. 4. Details are not described in this embodiment of this application.

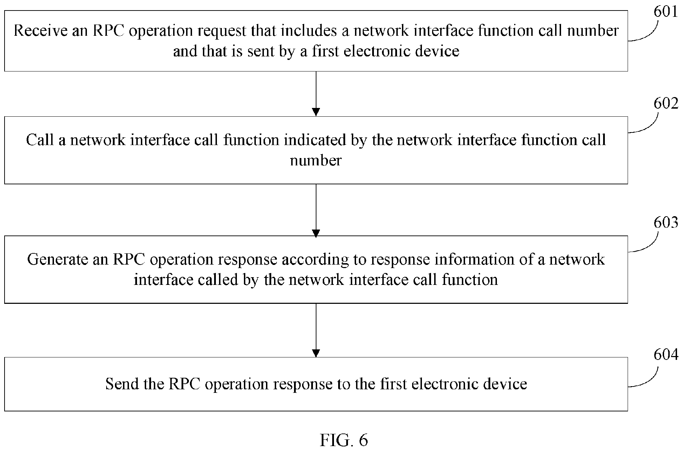

Referring to FIG. 6, FIG. 6 is a flowchart of a network connection method according to an embodiment of this application. The network connection method may be applied to the network connection system shown in FIG. 1 or FIG. 2, and is performed by a second electronic device. As shown in FIG. 6, the network connection method includes:
Step 601: Receive an RPC operation request that includes a network interface function call number and that is sent by a first electronic device.
Step 602: Call a network interface call function indicated by the network interface function call number.
Step 603: Generate an RPC operation response according to response information of a network interface called by the network interface call function.
Step 604: Send the RPC operation response to the first electronic device.

In this embodiment of this application, when the first electronic device meets the remote networking condition, the first electronic device sends the remote procedure call RPC operation request including the network interface function call number to the second electronic device, so that the second electronic device calls the network interface call function indicated by the network interface function call number, generates the RPC operation response according to the response information of the network interface called by the network interface call function, and sends the RPC operation response to the first electronic device. After receiving the RPC operation response sent by the second electronic device, the first electronic device may parse the RPC operation response to obtain the response information of the network interface. In this technical solution, the first electronic device may send the RPC operation request to the second electronic device, so that the second electronic device calls the local network interface, and returns the response information of the network interface to the first electronic device. The first electronic device implements proxy calling on the network interface of the second electronic device, and therefore the network interface of the second electronic device is a network communication capability provided by the first electronic device. Compared with the related technology, the first electronic device is prevented from using a network component such as a modem to provide a network communication capability. On the basis of ensuring that the first electronic device has a network communication capability, working duration of the network component in the first electronic device is reduced, thereby reducing impact of high running power consumption of the network component on an endurance capability of the first electronic device, and improving the endurance capability of the first electronic device.

Optionally, a handle of the network interface is second information, and after the calling a network interface call function indicated by the network interface function call number, the method further includes:
updating the handle of the network interface from the second information to first information, where the first information is used to indicate that the network interface is called by using the RPC operation request; and
sending the handle to the first electronic device.

Optionally, the calling a network interface call function indicated by the network interface function call number includes: when it is detected, by using a multiplex monitoring function, that the handle that is of the network interface and that includes the second information exists in a second storage space, calling the network interface call function indicated by the network interface function call number; and
the method further includes:
receiving the RPC operation request sent by the first electronic device, where the RPC operation request further includes the handle that is of the network interface and that includes the first information; and
updating the received handle from the first information to the second information, and storing an updated handle in the second storage space, where the handle is monitored by the multiplex monitoring function.

In the network connection method provided in this embodiment of this application, for an explanation and implementation of each step, refer to the foregoing explanation and implementation of the related step in the network connection method shown in FIG. 3 or FIG. 4. Details are not described in this embodiment of this application.

It should be noted that, the network connection method provided in the embodiments of this application may be performed by a network connection apparatus, or a control module that is in the network connection apparatus and that is configured to perform the network connection method. In the embodiments of this application, an example in which the network connection apparatus performs the network connection method is used to describe the network connection apparatus provided in the embodiments of this application.

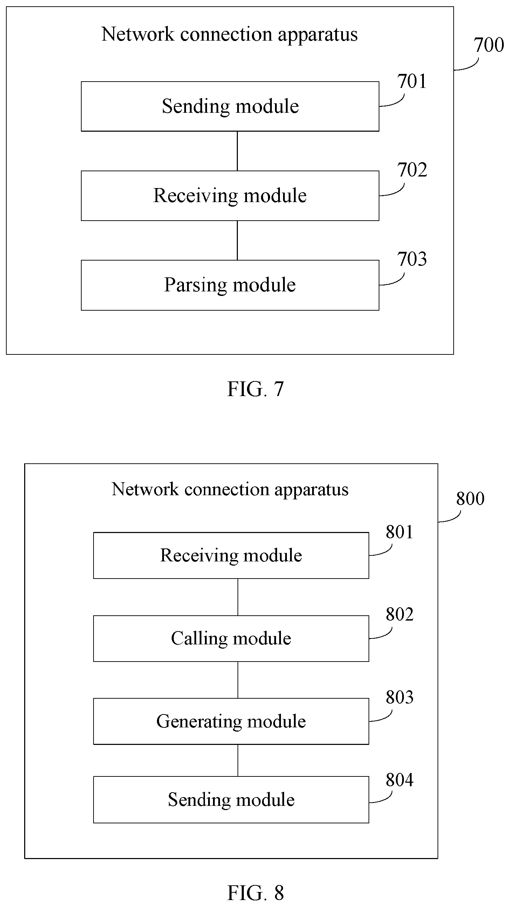

Referring to FIG. 7, FIG. 7 is a block diagram of a network connection apparatus according to an embodiment of this application. The network connection apparatus is applied to a first electronic device. As shown in FIG. 7, a network connection apparatus 700 includes:
a sending module 701, configured to: when a remote networking condition is met, send an RPC operation request including a network interface function call number to a second electronic device, so that the second electronic device calls a network interface call function indicated by the network interface function call number, generates an RPC operation response according to response information of a network interface called by the network interface call function, and sends the RPC operation response to the first electronic device;
a receiving module 702, configured to receive the RPC operation response sent by the second electronic device; and
a parsing module 703, configured to parse the RPC operation response to obtain the response information of the network interface.

Optionally, the receiving module 702 is further configured to receive a handle that is of the network interface and that is sent by the second electronic device, where the handle includes first information, the handle is sent by the second electronic device to the first electronic device after the second electronic device calls the network interface and updates the handle of the network interface to the first information, and the first information is used to indicate that the network interface is called by using the RPC operation request;
the apparatus 700 further includes a storage module, configured to store the handle in a first storage space, where the handle is monitored by a multiplex monitoring function; and
the sending module 701 is further configured to: respond to a networking instruction, and send the RPC operation request to the second electronic device in a case that it is detected, by using the multiplex monitoring function, that the handle including the first information exists in the first storage space, where the RPC operation request further includes the handle.

Optionally, the apparatus 700 also includes:
a calling module, configured to: respond to the networking instruction, and in a case that it is not detected, by using the multiplex monitoring function, that the handle including the first information exists in the first storage space, call the network interface call function, and obtain the response information of the network interface called by the network interface call function.

Optionally, the remote networking condition includes:
the first electronic device is connected to the second electronic device; or
the first electronic device is connected to the second electronic device, and power consumption of the first electronic device is greater than a specified power consumption threshold; or
the first electronic device is connected to the second electronic device, and electrical energy of the first electronic device is less than a specified electrical energy threshold.

In this embodiment of this application, when the first electronic device meets the remote networking condition, the first electronic device sends the remote procedure call RPC operation request including the network interface function call number to the second electronic device, so that the second electronic device calls the network interface call function indicated by the network interface function call number, generates the RPC operation response according to the response information of the network interface called by the network interface call function, and sends the RPC operation response to the first electronic device. After receiving the RPC operation response sent by the second electronic device, the first electronic device may parse the RPC operation response to obtain the response information of the network interface. In this technical solution, the first electronic device may send the RPC operation request to the second electronic device, so that the second electronic device calls the local network interface, and returns the response information of the network interface to the first electronic device. The first electronic device implements proxy calling on the network interface of the second electronic device, and therefore the network interface of the second electronic device is a network communication capability provided by the first electronic device. Compared with the related technology, the first electronic device is prevented from using a network component such as a modem to provide a network communication capability. On the basis of ensuring that the first electronic device has a network communication capability, working duration of the network component in the first electronic device is reduced, thereby reducing impact of high running power consumption of the network component on an endurance capability of the first electronic device, and improving the endurance capability of the first electronic device.

Referring to FIG. 8, FIG. 8 is a block diagram of a network connection apparatus according to an embodiment of this application. The network connection apparatus is applied to a first electronic device. As shown in FIG. 8, a network connection apparatus 800 includes:
a receiving module 801, configured to receive an RPC operation request that includes a network interface function call number and that is sent by a first electronic device;
a calling module 802, configured to call a network interface call function indicated by the network interface function call number;
a generating module 803, configured to generate an RPC operation response according to response information of a network interface called by the network interface call function; and
a sending module 804, configured to send the RPC operation response to the first electronic device.

Optionally, a handle of the network interface is second information, and the apparatus 800 further includes:
an updating module, configured to update the handle of the network interface from the second information to first information, where the first information is used to indicate that the network interface is called by using the RPC operation request; and
the sending module 804 is further configured to send the handle to the first electronic device.

Optionally, the calling module 802 is further configured to: when it is detected, by using a multiplex monitoring function, that the handle that is of the network interface and that includes the second information exists in a second storage space, call the network interface call function indicated by the network interface function call number;
the receiving module 801 is further configured to receive the RPC operation request sent by the first electronic device, where the RPC operation request further includes the handle that is of the network interface and that includes the first information; and
the updating module is further configured to: update the received handle from the first information to the second information, and store an updated handle in the second storage space, where the handle is monitored by the multiplex monitoring function.

In this embodiment of this application, when the first electronic device meets the remote networking condition, the first electronic device sends the remote procedure call RPC operation request including the network interface function call number to the second electronic device, so that the second electronic device calls the network interface call function indicated by the network interface function call number, generates the RPC operation response according to the response information of the network interface called by the network interface call function, and sends the RPC operation response to the first electronic device. After receiving the RPC operation response sent by the second electronic device, the first electronic device may parse the RPC operation response to obtain the response information of the network interface. In this technical solution, the first electronic device may send the RPC operation request to the second electronic device, so that the second electronic device calls the local network interface, and returns the response information of the network interface to the first electronic device. The first electronic device implements proxy calling on the network interface of the second electronic device, and therefore the network interface of the second electronic device is a network communication capability provided by the first electronic device. Compared with the related technology, the first electronic device is prevented from using a network component such as a modem to provide a network communication capability. On the basis of ensuring that the first electronic device has a network communication capability, working duration of the network component in the first electronic device is reduced, thereby reducing impact of high running power consumption of the network component on an endurance capability of the first electronic device, and improving the endurance capability of the first electronic device.

The network connection apparatus in this embodiment of this application may be an apparatus, or may be a component, an integrated circuit, or a chip in a terminal. The apparatus may be a mobile electronic device, or may be a non-mobile electronic device. For example, the mobile electronic device may be a mobile phone, a tablet computer, a notebook computer, a palmtop computer, an in-vehicle electronic device, a wearable device, an ultra-mobile personal computer (ultra-mobile personal computer, UMPC), a netbook, or a personal digital assistant (personal digital assistant, PDA). The non-mobile electronic device may be a server, a network attached storage (Network Attached Storage, NAS), a personal computer (personal computer, PC), a television (television, TV), a teller machine, or a self-service machine. This is not specifically limited in this embodiment of this application.

The network connection apparatus in this embodiment of this application may be an apparatus with an operating system. The operating system may be an Android (Android) operating system, an iOS operating system, or another possible operating system. This is not specifically limited in this embodiment of this application.

The network connection apparatus provided in this embodiment of this application can implement the processes implemented in the method embodiments shown in FIG. 3 to FIG. 6. To avoid repetition, details are not described herein again.

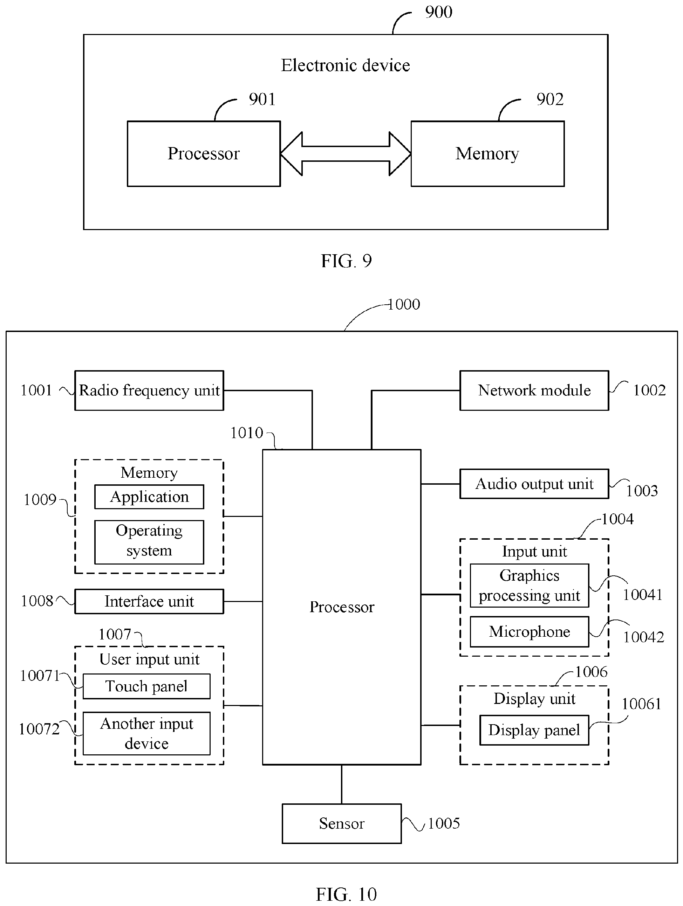

Optionally, as shown in FIG. 9, an embodiment of this application further provides an electronic device 900, including a processor 901, a memory 902, and a program or an instruction that is stored in the memory 902 and that can be run on the processor 901. The program or the instruction is executed by the processor 901 to implement the processes of the foregoing network connection method embodiment, and a same technical effect can be achieved. To avoid repetition, details are not described herein again.

It should be noted that the electronic device in this embodiment of this application includes the mobile electronic device and the non-mobile electronic device.

FIG. 10 is a schematic diagram of a hardware structure of an electronic device according to an embodiment of this application. An electronic device 1000 includes but is not limited to components such as a radio frequency unit 1001, a network module 1002, an audio output unit 1003, an input unit 1004, a sensor 1005, a display unit 1006, a user input unit 1007, an interface unit 1008, a memory 1009, and a processor 1010.

A person skilled in the art can understand that the electronic device 1000 may further include the power supply (for example, a battery) that supplies power to each component. The power supply may be logically connected to the processor 1010 by using a power supply management system, so as to manage functions such as charging, discharging, and power consumption by using the power supply management system. The structure of the electronic device shown in FIG. 10 does not constitute a limitation on the electronic device, and the electronic device may include more or fewer components than those shown in the figure, or combine some components, or have different component arrangements. Details are not described herein again.

In a case that the electronic device is a first electronic device, the processor 1010 is configured to: when a remote networking condition is met, send a remote procedure call RPC operation request including a network interface function call number to a second electronic device, so that the second electronic device calls a network interface call function indicated by the network interface function call number, generates an RPC operation response according to response information of a network interface called by the network interface call function, and sends the RPC operation response to the first electronic device.

The processor 1010 is further configured to receive the RPC operation response sent by the second electronic device.

The processor 1010 is further configured to parse the RPC operation response to obtain the response information of the network interface.

In this embodiment of this application, when the first electronic device meets the remote networking condition, the first electronic device sends the RPC operation request including the network interface function call number to the second electronic device, so that the second electronic device calls the network interface call function indicated by the network interface function call number, generates the RPC operation response according to the response information of the network interface called by the network interface call function, and sends the RPC operation response to the first electronic device. After receiving the RPC operation response sent by the second electronic device, the first electronic device may parse the RPC operation response to obtain the response information of the network interface. In this technical solution, the first electronic device may send the RPC operation request to the second electronic device, so that the second electronic device calls the local network interface, and returns the response information of the network interface to the first electronic device. The first electronic device implements proxy calling on the network interface of the second electronic device, and therefore the network interface of the second electronic device is a network communication capability provided by the first electronic device. Compared with the related technology, the first electronic device is prevented from using a network component such as a modem to provide a network communication capability. On the basis of ensuring that the first electronic device has a network communication capability, working duration of the network component in the first electronic device is reduced, thereby reducing impact of high running power consumption of the network component on an endurance capability of the first electronic device, and improving the endurance capability of the first electronic device.

Optionally, the processor 1010 is further configured to:
receive a handle that is of the network interface and that is sent by the second electronic device, where the handle includes first information, the handle is sent by the second electronic device to the first electronic device after the second electronic device calls the network interface and updates the handle of the network interface to the first information, and the first information is used to indicate that the network interface is called by using the RPC operation request;
store the handle in a first storage space, where the handle is monitored by a multiplex monitoring function; and
respond to a networking instruction, and send the RPC operation request to the second electronic device in a case that it is detected, by using the multiplex monitoring function, that the handle including the first information exists in the first storage space, where the RPC operation request further includes the handle.

Optionally, the processor 1010 is further configured to: respond to the networking instruction, and in a case that it is not detected, by using the multiplex monitoring function, that the handle including the first information exists in the first storage space, call the network interface call function, and obtain the response information of the network interface called by the network interface call function.

Optionally, the remote networking condition includes:
the first electronic device is connected to the second electronic device; or
the first electronic device is connected to the second electronic device, and power consumption of the first electronic device is greater than a specified power consumption threshold; or
the first electronic device is connected to the second electronic device, and electrical energy of the first electronic device is less than a specified electrical energy threshold.

In a case that the electronic device is a second electronic device, the processor 1010 is configured to receive a remote procedure call RPC operation request that includes a network interface function call number and that is sent by a first electronic device.

The processor 1010 is further configured to call a network interface call function indicated by the network interface function call number; and is further configured to generate an RPC operation response according to response information of a network interface called by the network interface call function; and send the RPC operation response to the first electronic device.

Optionally, handle of the network interface is second information, and the processor 1010 is further configured to:
update the handle of the network interface from the second information to first information, where the first information is used to indicate that the network interface is called by using the RPC operation request; and
send the handle to the first electronic device.

Optionally, the processor 1010 is further configured to: when it is detected, by using a multiplex monitoring function, that the handle that is of the network interface and that includes the second information exists in a second storage space, call the network interface call function indicated by the network interface function call number;
receive the RPC operation request sent by the first electronic device, where the RPC operation request further includes the handle that is of the network interface and that includes the first information; and
update the received handle from the first information to the second information, and store an updated handle in the second storage space, where the handle is monitored by the multiplex monitoring function.

It should be understood that, in this embodiment of this application, the input unit 1004 may include a graphics processing unit (Graphics Processing Unit, GPU) 10041 and a microphone 10042, and the graphics processing unit 10041 processes image data of a still image or a video that is obtained by an image capturing apparatus (for example, a camera) in a video capturing mode or an image capturing mode. The display unit 1006 may include a display panel 10061. The display panel 10061 may be configured in a form such as a liquid crystal display or an organic light-emitting diode. The user input unit 1007 may include a touch panel 10071 and another input device 10072. The touch panel 10071 is also referred to as a touchscreen. The touch panel 10071 may include two parts: a touch detection apparatus and a touch controller. The another input device 10072 may include but is not limited to a physical keyboard, a functional button (such as a volume control button or a power on/off button), a trackball, a mouse, and a joystick. Details are not described herein. The memory 1009 may be configured to store a software program and various data, including but not limited to an application and an operating system. An application processor and a modem processor may be integrated into the processor 1010, the application processor mainly processes an operating system, a user interface, an application program, and the like, and the modem processor mainly processes wireless communication. It can be understood that, alternatively, the modem processor may not be integrated into the processor 1010.

An embodiment of this application further provides a readable storage medium. The readable storage medium stores a program or an instruction, and the program or the instruction is executed by a processor to implement the processes in the foregoing network connection method embodiment, and a same technical effect can be achieved. To avoid repetition, details are not described herein again.

The processor is a processor in the electronic device in the foregoing embodiment. The readable storage medium includes a computer readable storage medium, for example, a read-only memory (Read-Only Memory, ROM), a random access memory (Random Access Memory, RAM), a magnetic disk, or an optical disc.

An embodiment of this application further provides a chip. The chip includes a processor and a communication interface, the communication interface is coupled to the processor, and the processor is configured to run a program or an instruction to implement the processes of the foregoing network connection method embodiment, and a same technical effect can be achieved. To avoid repetition, details are not described herein again.

It should be understood that the chip mentioned in this embodiment of this application may also be referred to as a system-level chip, a system chip, a chip system, or an on-chip system chip.

It should be noted that, in this specification, the terms "include", "comprise", or their any other variant is intended to cover a non-exclusive inclusion, so that a process, a method, an article, or an apparatus that includes a list of elements not only includes those elements but also includes other elements which are not expressly listed, or further includes elements inherent to such process, method, article, or apparatus. An element preceded by "includes a ..." does not, without more constraints, preclude the presence of additional identical elements in the process, method, article, or apparatus that includes the element. In addition, it should be noted that the scope of the method and the apparatus in the embodiments of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the foregoing descriptions of the embodiments, a person skilled in the art may clearly understand that the foregoing method embodiment may be implemented by software in addition to a necessary general hardware platform or by hardware. Whether these functions of the method and the unit in the example of each embodiment are executed in a hardware or software manner depends on a specific application and design constraint condition of the technical solution. A person skilled in the art may use different methods to implement the described functions for each particular application, but it should not be considered that the implementation goes beyond the scope of the present disclosure. In many cases, the foregoing method embodiments may be implemented by software in addition to a necessary general hardware platform. Based on such an understanding, the technical solutions of this application essentially or the part contributing to the prior art may be implemented in a form of a software product. The computer software product is stored in a storage medium (for example, a ROM/RAM, a floppy disk, or an optical disc), and includes several instructions for instructing a terminal (which may be a mobile phone, a computer, a server, an air conditioner, a network device, or the like) to perform the methods described in the embodiments of this application.

The embodiments of this application are described above with reference to the accompanying drawings, but this application is not limited to the above specific implementations, and the above specific implementations are merely illustrative but not restrictive , the scope of the invention being defined by the appended claims.

## Claims

1. A network connection method, wherein the method is applied to a first electronic device (101) and comprises:
when a remote networking condition is met, sending (501) a remote procedure call, RPC, operation request comprising a network interface function call number to a second electronic device (102), so that the second electronic device (102) calls a network interface call function indicated by the network interface function call number, generates an RPC operation response according to response information of a network interface called by the network interface call function, and sends the RPC operation response to the first electronic device (101);
receiving (502) the RPC operation response sent by the second electronic device (102); and
parsing (503) the RPC operation response to obtain the response information of the network interface;
wherein the remote networking condition comprises:
the first electronic device (101) is connected to the second electronic device (102); or
the first electronic device (101) is connected to the second electronic device (102), and power consumption of the first electronic device (101) is greater than a specified power consumption threshold; or
the first electronic device (101) is connected to the second electronic device (102), and electrical energy of the first electronic device (101) is less than a specified electrical energy threshold;
wherein after the sending (501) a remote procedure call, RPC, operation request comprising a network interface function call number to a second electronic device (102), the method further comprises:
receiving a handle that is of the network interface and that is sent by the second electronic device (102), wherein the handle comprises first information, the handle is sent by the second electronic device (102) to the first electronic device (101) after the second electronic device (102) calls the network interface and updates the handle of the network interface to the first information, and the first information is used to indicate that the network interface is called by using the RPC operation request;
storing the handle in a first storage space, wherein the handle is monitored by a multiplex monitoring function; and responding to a networking instruction, and sending the RPC operation request to the second electronic device (102) in a case that it is detected, by using the multiplex monitoring function, that the handle comprising the first information exists in the first storage space, wherein the RPC operation request further comprises the handle.

2. The method according to claim 1, wherein the responding to a networking instruction further comprises:
responding to the networking instruction, and in a case that it is not detected, by using the multiplex monitoring function, that the handle comprising the first information exists in the first storage space, calling the network interface call function, and obtaining the response information of the network interface called by the network interface call function.

3. A network connection method, wherein the method is applied to a second electronic device (102) and comprises:
receiving (601) a remote procedure call, RPC, operation request that comprises a network interface function call number and that is sent by a first electronic device (101);
calling (602) a network interface call function indicated by the network interface function call number;
generating (603) an RPC operation response according to response information of a network interface called by the network interface call function; and
sending (604) the RPC operation response to the first electronic device (101);
wherein a handle of the network interface is second information, and after the calling (602) a network interface call function indicated by the network interface function call number, the method further comprises:
updating the handle of the network interface from the second information to first information, wherein the first information is used to indicate that the network interface is called by using the RPC operation request; and
sending the handle to the first electronic device (101).

4. The method according to claim 3, wherein the calling (602) a network interface call function indicated by the network interface function call number comprises: when it is detected, by using a multiplex monitoring function, that the handle that is of the network interface and that comprises the second information exists in a second storage space, calling the network interface call function indicated by the network interface function call number; and
the method further comprises:
receiving the RPC operation request sent by the first electronic device (101), wherein the RPC operation request further comprises the handle that is of the network interface and that comprises the first information; and
updating the received handle from the first information to the second information, and storing an updated handle in the second storage space, wherein the handle is monitored by the multiplex monitoring function.

5. A network connection apparatus (700), wherein the apparatus is applied to a first electronic device (101) and comprises:
a sending module (701), configured to: when a remote networking condition is met, send a remote procedure call, RPC, operation request comprising a network interface function call number to a second electronic device (102), so that the second electronic device (102) calls a network interface call function indicated by the network interface function call number, generates an RPC operation response according to response information of a network interface called by the network interface call function, and sends the RPC operation response to the first electronic device (101);
a receiving module (702), configured to receive the RPC operation response sent by the second electronic device (102); and
a parsing module (703), configured to parse the RPC operation response to obtain the response information of the network interface;
wherein the remote networking condition comprises:
the first electronic device (101) is connected to the second electronic device (102); or
the first electronic device (101) is connected to the second electronic device (102), and power consumption of the first electronic device (101) is greater than a specified power consumption threshold; or
the first electronic device (101) is connected to the second electronic device (102), and electrical energy of the first electronic device (101) is less than a specified electrical energy threshold;
wherein the receiving module (702) is further configured to receive a handle that is of the network interface and that is sent by the second electronic device (102), wherein the handle comprises first information, the handle is sent by the second electronic device (102) to the first electronic device (101) after the second electronic device (102) calls the network interface and updates the handle of the network interface to the first information, and the first information is used to indicate that the network interface is called by using the RPC operation request;
the apparatus further comprises a storage module, configured to store the handle in a first storage space, wherein the handle is monitored by a multiplex monitoring function; and
the sending module (701) is further configured to: respond to a networking instruction, and send the RPC operation request to the second electronic device (102) in a case that it is detected, by using the multiplex monitoring function, that the handle comprising the first information exists in the first storage space, wherein the RPC operation request further comprises the handle.

6. The apparatus according to claim 5, wherein the apparatus further comprises:
a calling module, configured to: respond to the networking instruction, and in a case that it is not detected, by using the multiplex monitoring function, that the handle comprising the first information exists in the first storage space, call the network interface call function, and obtain the response information of the network interface called by the network interface call function.

7. A network connection apparatus (800), wherein the apparatus is applied to a second electronic device (102) and comprises:
a receiving module (801), configured to receive a remote procedure call, RPC, operation request that comprises a network interface function call number and that is sent by a first electronic device (101);
a calling module (802), configured to call a network interface call function indicated by the network interface function call number;
a generating module (803), configured to generate an RPC operation response according to response information of a network interface called by the network interface call function; and
a sending module (804), configured to send the RPC operation response to the first electronic device (101);
wherein a handle of the network interface is second information, and the apparatus further comprises:
an updating module, configured to update the handle of the network interface from the second information to first information, wherein the first information is used to indicate that the network interface is called by using the RPC operation request; and
the sending module (804) is further configured to send the handle to the first electronic device (101).

8. The apparatus according to claim 7, wherein
the calling module (802) is further configured to: when it is detected, by using a multiplex monitoring function, that the handle that is of the network interface and that comprises the second information exists in a second storage space, call the network interface call function indicated by the network interface function call number;
the receiving module (801) is further configured to receive the RPC operation request sent by the first electronic device (101), wherein the RPC operation request further comprises the handle that is of the network interface and that comprises the first information; and
the updating module is further configured to: update the received handle from the first information to the second information, and store an updated handle in the second storage space, wherein the handle is monitored by the multiplex monitoring function.

## Patentansprüche

1. Netzwerkverbindungsverfahren, wobei das Verfahren auf eine erste elektronische Vorrichtung (101) angewendet wird und Folgendes umfasst:
wenn eine Fernnetzwerkbedingung erfüllt wird, Senden (501) einer Fernprozeduraufruf-, RPC-, Betriebsanforderung, die eine Netzwerkschnittstellenfunktionsaufrufnummer umfasst, an eine zweite elektronische Vorrichtung (102), so dass die zweite elektronische Vorrichtung (102) eine Netzwerkschnittstellenaufruffunktion aufruft, die durch die Netzwerkschnittstellenfunktionsaufrufnummer angezeigt wird, eine RPC-Betriebsantwort gemäß Antwortinformationen einer Netzwerkschnittstelle erzeugt, die durch die Netzwerkschnittstellenaufruffunktion aufgerufen wird, und die RPC-Betriebsantwort an die erste elektronische Vorrichtung (101) sendet;
Empfangen (502) der RPC-Betriebsantwort, die von der zweiten elektronischen Vorrichtung (102) gesendet wird; und
Analysieren (503) der RPC-Betriebsantwort, um die Antwortinformationen der Netzwerkschnittstelle zu erhalten;
wobei die Fernnetzwerkbedingung Folgendes umfasst:
die erste elektronische Vorrichtung (101) ist mit der zweiten elektronischen Vorrichtung (102) verbunden; oder
die erste elektronische Vorrichtung (101) ist mit der zweiten elektronischen Vorrichtung (102) verbunden und der Stromverbrauch der ersten elektronischen Vorrichtung (101) ist größer als ein festgelegter Schwellenwert für den Stromverbrauch; oder
die erste elektronische Vorrichtung (101) ist mit der zweiten elektronischen Vorrichtung (102) verbunden und die elektrische Energie der ersten elektronischen Vorrichtung (101) ist kleiner als ein festgelegter Schwellenwert für die elektrische Energie;
wobei das Verfahren nach dem Senden (501) einer Fernprozeduraufruf-, RPC-, Betriebsanforderung, die eine Netzwerkschnittstellenfunktionsaufrufnummer umfasst, an eine zweite elektronische Vorrichtung (102) ferner Folgendes umfasst:
Empfangen eines Handles, das der Netzwerkschnittstelle gehört und das von der zweiten elektronischen Vorrichtung (102) gesendet wird, wobei das Handle erste Informationen umfasst, das Handle von der zweiten elektronischen Vorrichtung (102) an die erste elektronische Vorrichtung (101) gesendet wird, nachdem die zweite elektronische Vorrichtung (102) die Netzwerkschnittstelle aufruft und das Handle der Netzwerkschnittstelle auf die ersten Informationen aktualisiert, und die ersten Informationen verwendet werden, um anzuzeigen, dass die Netzwerkschnittstelle unter Verwendung der RPC-Betriebsanforderung aufgerufen wird;
Speichern des Handles in einem ersten Speicherplatz, wobei das Handle durch eine Multiplex-Überwachungsfunktion überwacht wird; und Antworten auf eine Netzwerkanweisung und Senden der RPC-Betriebsanforderung an die zweite elektronische Vorrichtung (102) in einem Fall, dass unter Verwendung der Multiplex-Überwachungsfunktion erkannt wird, dass das Handle, das die ersten Informationen umfasst, in dem ersten Speicherplatz besteht, wobei die RPC-Betriebsanforderung ferner das Handle umfasst.

2. Verfahren nach Anspruch 1, wobei das Antworten auf eine Netzwerkanweisung ferner Folgendes umfasst:
Antworten auf die Netzwerkanweisung und in einem Fall, dass unter Verwendung der Multiplex-Überwachungsfunktion nicht erkannt wird, dass das Handle, das die ersten Informationen umfasst, in dem ersten Speicherplatz besteht, Aufrufen der Netzwerkschnittstellenaufruffunktion und Erhalten der Antwortinformationen der Netzwerkschnittstelle, die durch die Netzwerkschnittstellenaufruffunktion aufgerufen wird.

3. Netzwerkverbindungsverfahren, wobei das Verfahren auf eine zweite elektronische Vorrichtung (102) angewendet wird und Folgendes umfasst:
Empfangen (601) einer Fernprozeduraufruf-, RPC-, Betriebsanforderung, die eine Netzwerkschnittstellenfunktionsaufrufnummer umfasst und die von einer ersten elektronischen Vorrichtung (101) gesendet wird;
Aufrufen (602) einer Netzwerkschnittstellenaufruffunktion, die durch die Netzwerkschnittstellenfunktionsaufrufnummer angezeigt wird;
Erzeugen (603) einer RPC-Betriebsantwort gemäß Antwortinformationen einer Netzwerkschnittstelle, die durch die Netzwerkschnittstellenaufruffunktion aufgerufen wird; und
Senden (604) der RPC-Betriebsantwort an die erste elektronische Vorrichtung (101);
wobei es sich bei einem Handle der Netzwerkschnittstelle um zweite Informationen handelt und das Verfahren nach dem Aufrufen (602) einer Netzwerkschnittstellenaufruffunktion, die durch die Netzwerkschnittstellenfunktionsaufrufnummer angezeigt wird, ferner Folgendes umfasst:
Aktualisieren des Handles der Netzwerkschnittstelle von den zweiten Informationen auf erste Informationen, wobei die ersten Informationen verwendet werden, um anzuzeigen, dass die Netzwerkschnittstelle unter Verwendung der RPC-Betriebsanforderung aufgerufen wird; und
Senden des Handles an die erste elektronische Vorrichtung (101).

4. Verfahren nach Anspruch 3, wobei das Aufrufen (602) einer Netzwerkschnittstellenaufruffunktion, die durch die Netzwerkschnittstellenfunktionsaufrufnummer angezeigt wird, Folgendes umfasst: wenn unter Verwendung einer Multiplex-Überwachungsfunktion erkannt wird, dass das Handle, das der Netzwerkschnittstelle gehört und das die zweiten Informationen umfasst, in einem zweiten Speicherplatz besteht, Aufrufen der Netzwerkschnittstellenaufruffunktion, die durch die Netzwerkschnittstellenfunktionsaufrufnummer angezeigt wird; und
das Verfahren ferner Folgendes umfasst:
Empfangen der RPC-Betriebsanforderung, die von der ersten elektronischen Vorrichtung (101) gesendet wird, wobei die RPC-Betriebsanforderung ferner das Handle umfasst, das der Netzwerkschnittstelle gehört und das die ersten Informationen umfasst; und
Aktualisieren des empfangenen Handles von den ersten Informationen auf die zweiten Informationen und Speichern eines aktualisierten Handles in dem zweiten Speicherplatz, wobei das Handle durch die Multiplex-Überwachungsfunktion überwacht wird.

5. Netzwerkverbindungsgerät (700), wobei das Gerät auf eine erste elektronische Vorrichtung (101) angewendet wird und Folgendes umfasst:
ein Sendemodul (701), das zu Folgendem konfiguriert ist:
wenn eine Fernnetzwerkbedingung erfüllt wird, Senden einer Fernprozeduraufruf-, RPC-, Betriebsanforderung, die eine Netzwerkschnittstellenfunktionsaufrufnummer umfasst, an eine zweite elektronische Vorrichtung (102), so dass die zweite elektronische Vorrichtung (102) eine Netzwerkschnittstellenaufruffunktion aufruft, die durch die Netzwerkschnittstellenfunktionsaufrufnummer angezeigt wird, eine RPC-Betriebsantwort gemäß Antwortinformationen einer Netzwerkschnittstelle erzeugt, die durch die Netzwerkschnittstellenaufruffunktion aufgerufen wird, und die RPC-Betriebsantwort an die erste elektronische Vorrichtung (101) sendet;
ein Empfangsmodul (702), das dazu konfiguriert ist, die RPC-Betriebsantwort zu empfangen, die von der zweiten elektronischen Vorrichtung (102) gesendet wird; und
ein Analysemodul (703), das dazu konfiguriert ist, die RPC-Betriebsantwort zu analysieren, um die Antwortinformationen der Netzwerkschnittstelle zu erhalten;
wobei die Fernnetzwerkbedingung Folgendes umfasst:
die erste elektronische Vorrichtung (101) ist mit der zweiten elektronischen Vorrichtung (102) verbunden; oder
die erste elektronische Vorrichtung (101) ist mit der zweiten elektronischen Vorrichtung (102) verbunden und der Stromverbrauch der ersten elektronischen Vorrichtung (101) ist größer als ein festgelegter Schwellenwert für den Stromverbrauch; oder
die erste elektronische Vorrichtung (101) ist mit der zweiten elektronischen Vorrichtung (102) verbunden und die elektrische Energie der ersten elektronischen Vorrichtung (101) ist kleiner als ein festgelegter Schwellenwert für die elektrische Energie;
wobei das Empfangsmodul (702) ferner dazu konfiguriert ist, ein Handle zu empfangen, das der Netzwerkschnittstelle gehört und das von der zweiten elektronischen Vorrichtung (102) gesendet wird, wobei das Handle erste Informationen umfasst, das Handle von der zweiten elektronischen Vorrichtung (102) an die erste elektronische Vorrichtung (101) gesendet wird, nachdem die zweite elektronische Vorrichtung (102) die Netzwerkschnittstelle aufruft und das Handle der Netzwerkschnittstelle auf die ersten Informationen aktualisiert, und die ersten Informationen verwendet werden, um anzuzeigen, dass die Netzwerkschnittstelle unter Verwendung der RPC-Betriebsanforderung aufgerufen wird;
das Gerät ferner ein Speichermodul umfasst, das dazu konfiguriert ist, das Handle in einem ersten Speicherplatz zu speichern, wobei das Handle durch eine Multiplex-Überwachungsfunktion überwacht wird; und
das Sendemodul (701) ferner zu Folgendem konfiguriert ist: Antworten auf eine Netzwerkanweisung und Senden der RPC-Betriebsanforderung an die zweite elektronische Vorrichtung (102) in einem Fall, dass unter Verwendung der Multiplex-Überwachungsfunktion erkannt wird, dass das Handle, das die ersten Informationen umfasst, in dem ersten Speicherplatz besteht, wobei die RPC-Betriebsanforderung ferner das Handle umfasst.

6. Gerät nach Anspruch 5, wobei das Gerät ferner Folgendes umfasst:
ein Aufrufmodul, das zu Folgendem konfiguriert ist:
Antworten auf die Netzwerkanweisung und in einem Fall, dass unter Verwendung der Multiplex-Überwachungsfunktion nicht erkannt wird, dass das Handle, das die ersten Informationen umfasst, in dem ersten Speicherplatz besteht, Aufrufen der Netzwerkschnittstellenaufruffunktion und Erhalten der Antwortinformationen der Netzwerkschnittstelle, die durch die Netzwerkschnittstellenaufruffunktion aufgerufen wird.

7. Netzwerkverbindungsgerät (800), wobei das Gerät auf eine zweite elektronische Vorrichtung (102) angewendet wird und Folgendes umfasst:
ein Empfangsmodul (801), das dazu konfiguriert ist, eine Fernprozeduraufruf-, RPC-, Betriebsanforderung zu empfangen, die eine Netzwerkschnittstellenfunktionsaufrufnummer umfasst und
die von einer ersten elektronischen Vorrichtung (101) gesendet wird;
ein Aufrufmodul (802), das dazu konfiguriert ist, eine Netzwerkschnittstellenaufruffunktion aufzurufen, die durch die Netzwerkschnittstellenfunktionsaufrufnummer angezeigt wird;
ein Erzeugungsmodul (803), das dazu konfiguriert ist, eine RPC-Betriebsantwort gemäß Antwortinformationen einer Netzwerkschnittstelle zu erzeugen, die durch die Netzwerkschnittstellenaufruffunktion aufgerufen wird; und
ein Sendemodul (804), das dazu konfiguriert ist, die RPC-Betriebsantwort an die erste elektronische Vorrichtung (101) zu senden;
wobei es sich bei einem Handle der Netzwerkschnittstelle um zweite Informationen handelt und das Gerät ferner Folgendes umfasst:
ein Aktualisierungsmodul, das dazu konfiguriert ist, das Handle der Netzwerkschnittstelle von den zweiten Informationen auf erste Informationen zu aktualisieren, wobei die ersten Informationen verwendet werden, um anzuzeigen, dass die Netzwerkschnittstelle unter Verwendung der RPC-Betriebsanforderung aufgerufen wird; und
das Sendemodul (804) ferner dazu konfiguriert ist, das Handle an die erste elektronische Vorrichtung (101) zu senden.

8. Gerät nach Anspruch 7, wobei
das Aufrufmodul (802) ferner zu Folgendem konfiguriert ist: wenn unter Verwendung einer Multiplex-Überwachungsfunktion erkannt wird, dass das Handle, das der Netzwerkschnittstelle gehört und das die zweiten Informationen umfasst, in einem zweiten Speicherplatz besteht, Aufrufen der Netzwerkschnittstellenaufruffunktion, die durch die Netzwerkschnittstellenfunktionsaufrufnummer angezeigt wird; und
das Empfangsmodul (801) ferner dazu konfiguriert ist,
die RPC-Betriebsanforderung, die von der ersten elektronischen Vorrichtung (101) gesendet wird, zu empfangen, wobei die RPC-Betriebsanforderung ferner das Handle umfasst, das der Netzwerkschnittstelle gehört und das die ersten Informationen umfasst; und
das Aktualisierungsmodul ferner zu Folgendem konfiguriert ist: Aktualisieren des empfangenen Handles von den ersten Informationen auf die zweiten Informationen und Speichern eines aktualisierten Handles in dem zweiten Speicherplatz, wobei das Handle durch die Multiplex-Überwachungsfunktion überwacht wird.

## Revendications

1. Procédé de connexion réseau, dans lequel le procédé est appliqué à un premier dispositif électronique (101) et comprend :
lorsqu'un état de mise en réseau à distance est rempli, envoyer (501) une requête d'opération d'appel de procédure à distance, RPC, comprenant un numéro d'appel de fonction d'interface réseau à un second dispositif électronique (102), de sorte que le second dispositif électronique (102) appelle une fonction d'appel d'interface réseau indiquée par le numéro d'appel de fonction d'interface réseau, génère une réponse d'opération RPC selon des informations de réponse d'une interface réseau appelée par la fonction d'appel d'interface réseau, et envoie la réponse d'opération RPC au premier dispositif électronique (101) ;
recevoir (502) la réponse d'opération RPC envoyée par le second dispositif électronique (102) ; et
analyser (503) la réponse d'opération RPC pour obtenir les informations de réponse de l'interface réseau ;
dans lequel l'état de mise en réseau à distance comprend :
le premier dispositif électronique (101) est connecté au second dispositif électronique (102) ; ou
le premier dispositif électronique (101) est connecté au second dispositif électronique (102), et la consommation d'énergie du premier dispositif électronique (101) est supérieure à un seuil de consommation d'énergie spécifié ; ou
le premier dispositif électronique (101) est connecté au second dispositif électronique (102), et l'énergie électrique du premier dispositif électronique (101) est inférieure à un seuil d'énergie électrique spécifié ;
dans lequel, après l'envoi (501) d'une requête d'opération d'appel de procédure à distance, RPC, comprenant un numéro d'appel de fonction d'interface réseau à un second dispositif électronique (102), le procédé comprend en outre :
recevoir une gestion étant de l'interface réseau et qui est envoyée par le second dispositif électronique (102), dans lequel la gestion comprend des premières informations, la gestion est envoyée par le second dispositif électronique (102) au premier dispositif électronique (101) après que le second dispositif électronique (102) a appelé l'interface réseau et mis à jour la gestion de l'interface réseau vers les premières informations, et les premières informations sont utilisées pour indiquer que l'interface réseau est appelée à l'aide de la requête d'opération RPC ;
stocker la gestion dans un premier espace de stockage, dans lequel la gestion est surveillée par une fonction de surveillance multiplexe ; et répondre à une instruction de mise en réseau, et envoyer la requête d'opération RPC au second dispositif électronique (102) dans le cas où il est détecté, à l'aide de la fonction de surveillance multiplexe, que la gestion comprenant les premières informations existe dans le premier espace de stockage, dans lequel la requête d'opération RPC comprend en outre la gestion.

2. Procédé selon la revendication 1, dans lequel la réponse à une instruction de mise en réseau comprend en outre :
répondre à l'instruction de mise en réseau, et dans le cas où il n'est pas détecté, à l'aide de la fonction de surveillance multiplexe, que la gestion comprenant les premières informations existe dans le premier espace de stockage, appeler la fonction d'appel d'interface réseau, et obtenir les informations de réponse de l'interface réseau appelée par la fonction d'appel d'interface réseau.

3. Procédé de connexion réseau, dans lequel le procédé est appliqué à un second dispositif électronique (102) et comprend :
recevoir (601) une requête d'opération d'appel de procédure à distance, RPC, qui comprend un numéro d'appel de fonction d'interface réseau et qui est envoyée par un premier dispositif électronique (101) ;
appeler (602) une fonction d'appel d'interface réseau indiquée par le numéro d'appel de fonction d'interface réseau ;
générer (603) une réponse d'opération RPC selon des informations de réponse d'une interface réseau appelée par la fonction d'appel d'interface réseau ; et
envoyer (604) la réponse d'opération RPC au premier dispositif électronique (101) ;
dans lequel une gestion de l'interface réseau est des secondes informations, et après l'appel (602) d'une fonction d'appel d'interface réseau indiquée par le numéro d'appel de fonction d'interface réseau, le procédé comprend en outre :
mettre à jour la gestion de l'interface réseau des secondes informations vers les premières informations, dans lequel les premières informations sont utilisées pour indiquer que l'interface réseau est appelée à l'aide de la requête d'opération RPC ; et
envoyer la gestion au premier dispositif électronique (101).

4. Procédé selon la revendication 3, dans lequel l'appel (602) d'une fonction d'appel d'interface réseau indiquée par le numéro d'appel de fonction d'interface réseau comprend : lorsqu'il est détecté, à l'aide d'une fonction de surveillance multiplexe, que la gestion, qui est celle de l'interface réseau et qui comprend les secondes informations, existe dans un second espace de stockage, appeler la fonction d'appel d'interface réseau indiquée par le numéro d'appel de fonction d'interface réseau ; et
le procédé comprend de plus :
recevoir la requête d'opération RPC envoyée par le premier dispositif électronique (101), dans lequel la requête d'opération RPC comprend en outre la gestion étant de l'interface réseau et qui comprend les premières informations ; et
mettre à jour la gestion reçue des premières informations vers les secondes informations, et stocker une gestion mise à jour dans le second espace de stockage, dans lequel la gestion est surveillée par la fonction de surveillance multiplexe.

5. Appareil de connexion réseau (700), dans lequel l'appareil est appliqué à un premier dispositif électronique (101) et comprend :
un module d'envoi (701), configuré pour : lorsqu'un état de mise en réseau à distance est rempli, envoyer une requête d'opération d'appel de procédure à distance, RPC, comprenant un numéro d'appel de fonction d'interface réseau à un second dispositif électronique (102), de sorte que le second dispositif électronique (102) appelle une fonction d'appel d'interface réseau indiquée par le numéro d'appel de fonction d'interface réseau, génère une réponse d'opération RPC selon des informations de réponse d'une interface réseau appelée par la fonction d'appel d'interface réseau, et envoie la réponse d'opération RPC au premier dispositif électronique (101) ;
un module de réception (702), configuré pour recevoir la réponse d'opération RPC envoyée par le second dispositif électronique (102) ; et
un module d'analyse (703), configuré pour analyser la réponse d'opération RPC pour obtenir les informations de réponse de l'interface réseau ;
dans lequel l'état de mise en réseau à distance comprend :
le premier dispositif électronique (101) est connecté au second dispositif électronique (102) ; ou
le premier dispositif électronique (101) est connecté au second dispositif électronique (102), et la consommation d'énergie du premier dispositif électronique (101) est supérieure à un seuil de consommation d'énergie spécifié ; ou
le premier dispositif électronique (101) est connecté au second dispositif électronique (102), et l'énergie électrique du premier dispositif électronique (101) est inférieure à un seuil d'énergie électrique spécifié ;
dans lequel le module de réception (702) est en outre configuré pour recevoir une gestion étant de l'interface réseau et qui est envoyée par le second dispositif électronique (102), dans lequel la gestion comprend des premières informations, la gestion est envoyée par le second dispositif électronique (102) au premier dispositif électronique (101) après que le second dispositif électronique (102) a appelé l'interface réseau et mis à jour la gestion de l'interface réseau vers les premières informations, et les premières informations sont utilisées pour indiquer que l'interface réseau est appelée à l'aide de la requête d'opération RPC ;
l'appareil comprend en outre un module de stockage, configuré pour stocker la gestion dans un premier espace de stockage, dans lequel la gestion est surveillée par une fonction de surveillance multiplexe ; et
le module d'envoi (701) est en outre configuré pour : répondre à une instruction de mise en réseau, et envoyer la requête d'opération RPC au second dispositif électronique (102) dans le cas où il est détecté, à l'aide de la fonction de surveillance multiplexe, que la gestion comprenant les premières informations existe dans le premier espace de stockage, dans lequel la requête d'opération RPC comprend en outre la gestion.

6. Appareil selon la revendication 5, dans lequel l'appareil comprend en outre :
un module d'appel, configuré pour : répondre à l'instruction de mise en réseau, et dans le cas où il n'est pas détecté, à l'aide de la fonction de surveillance multiplexe, que la gestion comprenant les premières informations existe dans le premier espace de stockage, appeler la fonction d'appel d'interface réseau, et obtenir les informations de réponse de l'interface réseau appelée par la fonction d'appel d'interface réseau.

7. Appareil de connexion réseau (800), dans lequel l'appareil est appliqué à un second dispositif électronique (102) et comprend :
un module de réception (801), configuré pour recevoir une requête d'opération d'appel de procédure à distance, RPC, qui comprend un numéro d'appel de fonction d'interface réseau et qui est envoyée par un premier dispositif électronique (101) ;
un module d'appel (802), configuré pour appeler une fonction d'appel d'interface réseau indiquée par le numéro d'appel de fonction d'interface réseau ;
un module de génération (803), configuré pour générer une réponse d'opération RPC selon des informations de réponse d'une interface réseau appelée par la fonction d'appel d'interface réseau ; et
un module d'envoi (804), configuré pour envoyer la réponse d'opération RPC au premier dispositif électronique (101) ;
dans lequel une gestion de l'interface réseau est des secondes informations, et l'appareil comprend en outre : un module de mise à jour, configuré pour mettre à jour la gestion de l'interface réseau des secondes informations vers les premières informations, dans lequel les premières informations sont utilisées pour indiquer que l'interface réseau est appelée à l'aide de la requête d'opération RPC ; et
le module d'envoi (804) est en outre configuré pour envoyer la gestion au premier dispositif électronique (101).

8. Appareil selon la revendication 7, dans lequel
le module d'appel (802) est en outre configuré pour :
lorsqu'il est détecté, à l'aide d'une fonction de surveillance multiplexe, que la gestion étant celle de l'interface réseau et qui comprend les secondes informations existe dans un second espace de stockage, appeler la fonction d'appel d'interface réseau indiquée par le numéro d'appel de fonction d'interface réseau ;
le module de réception (801) est en outre configuré pour recevoir la requête d'opération RPC envoyée par le premier dispositif électronique (101), dans lequel la requête d'opération RPC comprend en outre la gestion étant de l'interface réseau et qui comprend les premières informations ; et
le module de mise à jour est en outre configuré pour : mettre à jour la gestion reçue des premières informations vers les secondes informations, et stocker une gestion mise à jour dans le second espace de stockage, dans lequel la gestion est surveillée par la fonction de surveillance multiplexe.
